# EUROPEAN PATENT APPLICATION

(11) **EP 1 944 931 A1**
(43) Date of publication of application: **16.07.2008**
(21) Application number: 08150280.9
(22) Date of filing: 15.01.2008
(51) Int. Cl.: H04L 12/58, H04M 1/725, G06Q 10/00

(54) **Mobile terminal apparatus, server apparatus and mobile communication network system for creating web mails after an editing interruption**

(30) Priority: 15.01.2007 JP 2007006129
(71) Applicant: NTT DoCoMo, Inc., Chiyoda-ku Tokyo 100-6150 (JP)
(72) Inventor: Kikuchi, Daisuke, Chiyoda-ku Tokyo 100-6150 (JP)
(74) Representative: Schwabe - Sandmair - Marx

(57) **Abstract**

In a mobile communication network system provided with a cellular telephone 10 enabling use of mail service for mobile terminals using a mobile communication network and Web mail service, and a server apparatus 20 that manages e-mail addresses assigned to the cellular telephone 10 for both the mail service, already input information is stored in the terminal when creation of Web mail is suspended in the cellular telephone 10, while the stored information is transmitted as an e-mail in the mail service for mobile terminals, and when the server apparatus 20 receives the e-mail, the server apparatus 20 replaces an e-mail address of a sender with an e-mail address for the Web mail service to transfer.

## Description

The present disclosure relates to subject matters contained in Japanese Patent Application No. 2007-6129 filed on January 15, 2007, which are expressly incorporated herein by reference in its entireties.

### BACKGROUND OF THE INVENTION

### 1. Field of the Invention

The present invention relates to a mobile terminal apparatus, server apparatus and mobile communication network system, and more particularly, to a mobile terminal apparatus enabling use of mail service for mobile terminals using a mobile communication network and Web mail service, a server apparatus that provides the mail service for mobile terminals and Web mail service, and a mobile communication network system having the mobile terminal apparatus and server apparatus.

### 2. Description of the Prior Art

Conventionally, Web mail service has been known to transmit and receive e-mails using the Web browser function (for example, Japanese Laid-Open Patent Publication No. 2006-146388). In this Web mail service, as distinct from normal mail service, since all the messages are managed in the server apparatus on the network, users are capable of checking reception of new e-mails and descriptions of past e-mails from anywhere using their terminal apparatuses installed with the Web browser function.

Further, at present, in the mobile terminal apparatus such as cellular telephones and the like, models installed with the Web browser function have become widespread, and it is carried out to receive provision of Web mail service using such mobile terminal apparatuses. For example, when a user does not want to leave a message requiring concealment in the mobile terminal apparatus, the user uses such Web mail service in the mobile terminal apparatus.

However, in the aforementioned Web mail service, it is necessary to gain access to a server apparatus that provides the Web mail service using the Web browser function, display a screen (hereinafter, referred to as a "Web mail creation processing screen" as appropriate) required to create an e-mail, and create an e-mail from the mail creation processing screen. Particularly, when the user needs to suspend the processing during creation of e-mail, the user is required to perform the processing again from the beginning, and there are problems that the time required for creation of e-mail becomes long, while the cost required for creation of e-mail becomes expensive.

In addition, it is also considered that the user stores an e-mail in process of creation in the server apparatus and reads out the e-mail in process of creation to resume the mail creation processing. However, also in this case, it is necessary to gain access to the server apparatus to read out the stored e-mail in process of creation, and therefore, the case does not reach a resolution of the problems in terms of time and cost required for creation of e-mail.

### SUMMARY OF THE INVENTION

It is an object of the invention to provide a mobile terminal apparatus, server apparatus and mobile communication network system capable of shortening the time required for creation of e-mail while reducing the cost required for creation of e-mail even when processing is suspended during the creation of Web mail in the mobile terminal apparatus.

A mobile terminal apparatus of the invention is characterized by having a mail processing section for mobile terminals that performs communications with a mail server that provides mail service for mobile terminals using a mobile communication network, a Web mail processing section that performs communications with a Web server that provides Web mail service, and a storing section that stores already input information when creation of an e-mail is suspended in the mail service for mobile terminals, where the already input information is stored in the storing section when creation of an e-mail is suspended in the Web mail service, while when receiving an instruction to transmit the information stored in the storing section, the mail processing section for mobile terminals transmits the information as an e-mail in the mail service for mobile terminals.

According to the mobile terminal apparatus of the invention, when creation of an e-mail (Web mail) is suspended in the Web mail service, the already input information is stored in the storing section, and then, when receiving an instruction to transmit the information stored in the storing section, the information is transmitted as an e-mail in the mail service for mobile terminals. Therefore, even when the processing is suspended during the creation of Web mail, it is not necessary to perform the processing again from the beginning, and it is thereby possible to shorten the time required to create the mail, while reducing the cost required to create the mail.

In the above-mentioned mobile terminal apparatus, in storing the already input information in the storing section when the creation of the e-mail is suspended in the Web mail service, it is preferable to add identification information indicating that the information is information stored during the creation of the e-mail in the Web mail service. In this case, the mail server receiving the e-mail from the mobile terminal apparatus judges the identification information, and is thereby capable of determining whether or not the e-mail is an e-mail stored during creation of Web mail with ease and reliability.

A server apparatus of the invention is characterized by having a mail server section that provides mail service for mobile terminals using a mobile communication network, a Web mail server section that provides Web mail service, and a user data managing section that manages e-mail addresses assigned to a mobile terminal apparatus for the mail service for mobile terminals and for the Web mail service, where when receiving an e-mail in the mail service for mobile terminals from the mobile terminal apparatus, the server apparatus sets an e-mail address of a sender corresponding to whether the e-mail is an e-mail stored during creation of the e-mail in the Web mail service to transfer.

According to the server apparatus of the invention, it is possible to set an e-mail address of a sender corresponding to whether the e-mail is an e-mail stored during creation of the e-mail in the Web mail service. By this means, for example, even when the information stored during creation of Web mail in the mobile terminal apparatus is received as an e-mail in the mail service for mobile terminals, it is possible to transfer the information as an e-mail from an e-mail address for Web mail service. Therefore, even in such a configuration that the already input information is stored in the mobile terminal apparatus when the creation of Web mail is suspended, it is possible to transmit an e-mail corresponding to the information from an e-mail address for Web mail service. As a result, even when the processing is suspended during the time Web mail is created in the mobile terminal apparatus, it is possible to transmit information that has been input at the time of the creation of the Web mail to a transmission destination, and it is thereby possible to shorten the time required to create the mail, while reducing the cost required to create the mail.

In the above-mentioned server apparatus, when an e-mail in the mail service for mobile terminals received from the mobile terminal apparatus is an e-mail that is stored during creation of the e-mail in the Web mail service, it is preferable to replace an e-mail address of the sender with an e-mail address for the Web mail service. In this case, even when the information stored during the creation of Web mail in the mobile terminal apparatus is received as an e-mail in the mail service for mobile terminals, it is possible to reliably transfer the e-mail as an e-mail from the e-mail address for the Web mail service.

In the above-mentioned server apparatus, it is preferable to determine whether the e-mail is an e-mail stored during creation of the e-mail in the Web mail service, corresponding to the identification information added to the e-mail in the mail service for mobile terminals received from the mobile terminal apparatus. In this case, corresponding to the identification information added to the e-mail from the mobile terminal apparatus, it is possible to determine whether or not the mail is an e-mail stored during the creation of Web mail with ease and reliability.

A mobile communication network system of the invention is a mobile communication network system provided with a mobile terminal apparatus enabling use of mail service for mobile terminals using a mobile communication network and Web mail service, and a server apparatus that manages e-mail addresses assigned to the mobile terminal apparatus for the mail service for mobile terminals and for the Web mail service, and is characterized in that already input information is stored in the mobile terminal apparatus when creation of an e-mail in the Web mail service is suspended in the mobile terminal apparatus, while the stored information is transmitted as an e-mail in the mail service for mobile terminals, and when the server apparatus receives the e-mail, the server apparatus replaces an e-mail address of a sender with an e-mail address for the Web mail service to transfer.

According to the mobile communication network system, when the creation of Web mail is suspended in a mobile terminal apparatus, the already input information is stored in the mobile terminal apparatus, and the stored information is transmitted as an e-mail in the mail service for mobile terminals. Meanwhile, when the server apparatus receives the e-mail from the mobile terminal apparatus, the server apparatus replaces an e-mail address of the sender with an e-mail address for the Web mail service to transfer. Therefore, even when the processing is suspended during the creation of Web mail, it is not necessary to perform the processing again from the beginning, and since the e-mail is transferred from the e-mail address for the Web mail service through the server apparatus, it is possible to shorten the time required to create the mail, while reducing the cost required to create the mail.

In the mobile communication network system, it is preferable that the mobile terminal apparatus adds identification information indicating that the information is information stored during creation of the e-mail in the Web mail service in storing the already input information when the creation of the e-mail is suspended in the Web mail service, and that the server apparatus determines whether the e-mail in the mail service for mobile terminals received from the mobile terminal apparatus is an e-mail stored during the creation of the e-mail in the Web mail service corresponding to the identification information. In this case, corresponding to the identification information added to the e-mail from the mobile terminal apparatus, it is possible to determine whether or not the mail is an e-mail stored during the creation of Web mail with ease and reliability.

### BRIEF DESCRIPTION OF THE DRAWINGS

The various features of novelty which characterize the invention are pointed out with particularity in the claims attached to and forming a part of this specification. For a better understanding of the invention, its operating advantages, and specific objects attained by its use, reference should be had to the accompanying drawing and descriptive matter in which there is illustrated and described a preferred embodiment of the invention.
FIG.1 is a diagram showing a schematic configuration of a communication system according to one embodiment of the invention;
FIG.2 is a diagram showing an example of user data managed in a user data managing section of a server according to the above-mentioned embodiment;
FIG.3 is a block diagram illustrating a configuration of a cellular telephone according to the above-mentioned embodiment;
FIG.4 is a flow diagram to explain the operation when i-mode mail is transmitted in the cellular telephone according to the above-mentioned embodiment;
FIG.5 is a diagram illustrating a memory area for i-mode mail generated in a sub-memory of the cellular telephone according to the above-mentioned embodiment;
FIG.6 is another diagram illustrating the memory area for i-mode mail generated in the sub-memory of the cellular telephone according to the above-mentioned embodiment;
FIG.7 is a diagram illustrating stored information stored in a storage area for mail in process of creation in a main memory of the cellular telephone according to the above-mentioned embodiment;
FIG.8 8 is a diagram showing an example of a stored mail list screen displayed in a display section of the cellular telephone according to the above-mentioned embodiment;
FIG.9 is a flow diagram to explain the operation when Web mail is transmitted in the cellular telephone according to the above-mentioned embodiment;
FIG.10 is another flow diagram to explain the operation when Web mail is transmitted in the cellular telephone according to the above-mentioned embodiment;
FIG.11 is a diagram showing an example of a Web mail menu screen displayed in the display section of the cellular telephone according to the above-mentioned embodiment;
FIG.12 is a diagram showing an example of resource data to display the Web mail menu screen as shown in FIG.11;
FIG.13 is a diagram illustrating a memory area for Web mail generated in the sub-memory of the cellular telephone according to the above-mentioned embodiment;
FIG.14 is another diagram illustrating the memory area for Web mail generated in the sub-memory of the cellular telephone according to the above-mentioned embodiment;
FIG.15 is a diagram showing an example of the Web mail menu screen displayed in the display section of the cellular telephone according to the above-mentioned embodiment;
FIG.16 is a diagram illustrating stored information stored in the storage area for mail in process of creation in the main memory of the cellular telephone according to the above-mentioned embodiment;
FIG.17 is a diagram showing an example of the stored mail list screen displayed in the display section of the cellular telephone according to the above-mentioned embodiment;
FIG.18 is a diagram illustrating a memory area for i-mode mail generated in the sub-memory of the cellular telephone according to the above-mentioned embodiment;
FIG.19 is another diagram illustrating the memory area for i-mode mail generated in the sub-memory of the cellular telephone according to the above-mentioned embodiment; and
FIG.20 is a flow diagram to explain the operation when i-mode mail or Web mail is transferred in the server according to the above-mentioned embodiment.

### DESCRIPTION OF THE PREFERRED EMBODIMENTS

An embodiment of the invention will specifically be described below with reference to accompanying drawings.

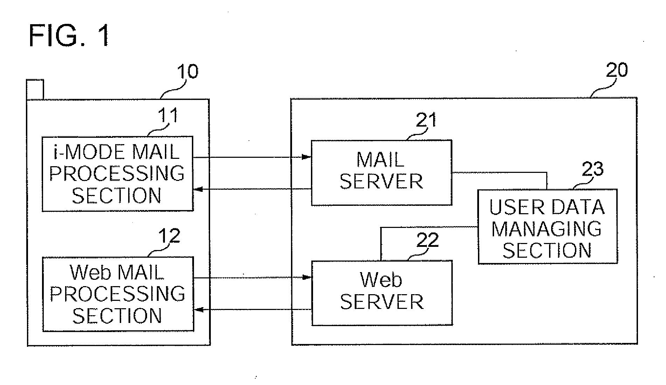

FIG.1 is a diagram showing a schematic configuration of a mobile communication network system (hereinafter, simply referred to as a "communication system") according to one embodiment of the invention. As shown in FIG.1, the communication system according to this embodiment is comprised of a cellular telephone 10 as a mobile terminal apparatus, and a server apparatus (hereinafter, simply referred to as a "server") 20 connected via a mobile communication network formed of an IMT (International Mobile Telecommunication) network and the like.

In the communication system according to this embodiment, the cellular telephone 10 is configured to be able to use mail service for cellular telephones using the mobile communication network and Web mail service. Hereinafter, as the mail service for cellular telephones, i-mode (registered trademark) mail service is explained as a specific example. The cellular telephone 10 has an i-mode mail processing section 11 that performs communications with a mail server (described later) that provides the i-mode mail service, and a Web mail processing section 12 that performs communications with a Web mail server (described later) that provides the Web mail service.

Meanwhile, the server 20 has a mail server section (hereinafter, simply referred to as a "mail server") 21 that provides the i-mode mail service to the cellular telephone 10, and a Web server section (hereinafter, simply referred to as a "Web server") 22 that provides the Web mail service to the cellular telephone 10. Further, the server 20 has a user data managing section 23 that manages user data including an i-mode mail address beforehand assigned to transmit and receive i-mode mail and a Web mail address beforehand assigned to transmit and receive Web mail each in the cellular telephone 10.

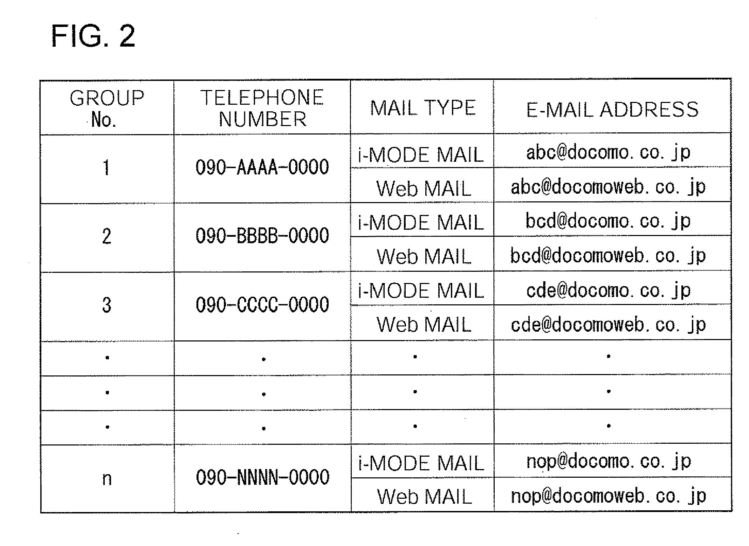

Herein, descriptions of the user data managed in the user data managing section 23 are described with reference to F1G.2. FIG. 2 is a diagram showing an example of the user data managed in the user data managing section 23 of the server 20 according to this embodiment. In addition, FIG.2 shows the user data corresponding to a plurality of cellular telephones managed by the server 20, as well as the cellular telephone 10.

As shown in FIG.2, with the user data managing section 23 are registered a group number (No.) and telephone number in association with each cellular telephone. Further, e-mail addresses assigned to each cellular telephone are registered for each mail type (i-mode address and Web mail address). For example, in the cellular telephone of "group No.1", telephone number "090-AAA-0000" is registered, while "abc@docomo.ne.jp" and "abc@docomoweb.ne.jp" are registered respectively as an i-mode mail address and Web mail address.

In the communication system according to this embodiment, when the processing is suspended during creation of Web mail in the cellular telephone 10, information corresponding to the Web mail in process of the creation is stored in the cellular telephone 10. When the creation of mail whose processing is suspended is performed again, the stored information is read to perform processing such as edits and the like, and then, transmitted to the server 20 as i-mode mail. The server 20 sets a mail address of the sender to transfer the mail, corresponding to the content of the identification information (that is a Web mail flag described later) added to the received i-mode mail.

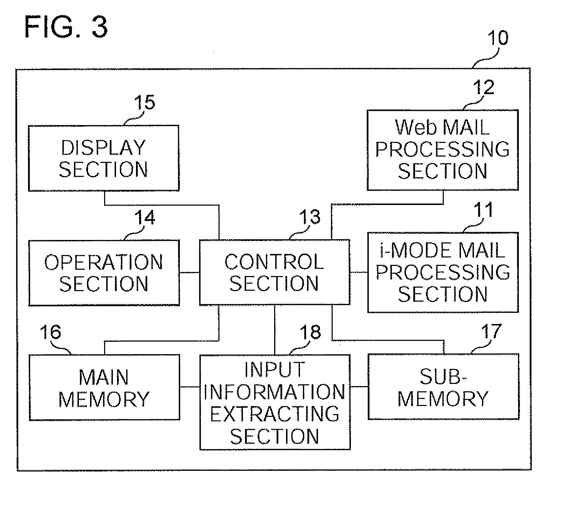

Thus, the cellular telephone 10 according to this embodiment has the configuration for performing operational input and screen display associated with creation of i-mode mail or Web mail, transmitting and receiving i-mode mail or Web mail, storing information corresponding to Web mail in process of creation, and the like. Herein, a configuration of the cellular telephone 10 according to this embodiment is described with reference to FIG.3.

FIG. 3 is a block diagram illustrating the configuration of the cellular telephone 10 according to this embodiment. The configuration of the cellular telephone 10 as shown in FIG.3 is simplified to explain the invention, and is assumed to have processing functions required for a normal cellular telephone. Further, in the cellular telephone 10 as shown in FIG.3, the same sections (i-mode mail processing section 11 and Web mail processing section 12) as shown in FIG.1 are assigned the same reference numerals.

In the cellular telephone 10 as shown in FIG.3, a control section 13 is to perform entire control of the cellular telephone 10, and performs control of the above-mentioned i-mode mail processing section 11 and Web mail processing section 12, and each component described later. An operation section 14 receives instructions to the cellular telephone 10 and character information input from the user. For example, the operation section 14 receives instructions to transmit i-mode mail and Web mail, and input of character information composing a massage of the mail. A display section 15 displays information corresponding to the state of the cellular telephone 10. For example, the display section 15 displays a Web mail creation screen described later and the like.

A main memory 16 and sub-memory 17 store information required to execute each processing in the cellular telephone 10. Particularly, the main memory 16 stores information corresponding to an e-mail in process of creation when processing is suspended during the creation of the mail. The sub-memory 17 temporarily stores character information input from the user at the time of mail creation, and information to display a screen (Web mail creation processing screen) required to create Web mail in the display section 15. For example, resource data, input character information and the like is temporarily stored, as the information to display the Web mail creation processing screen. An input information extracting section 18 extracts the character information input from the user from the information to display the Web mail creation processing screen which is stored in the sub-memory 17.

The operation when i-mode mail or Web mail is transmitted (transferred) in the communication system with the above-mentioned configuration will be described next in the transmission operation in the cellular telephone 10 and the transfer operation in the server 20. Described first is the operation in the case of transmitting i-mode mail and Web mail in the cellular telephone 10.

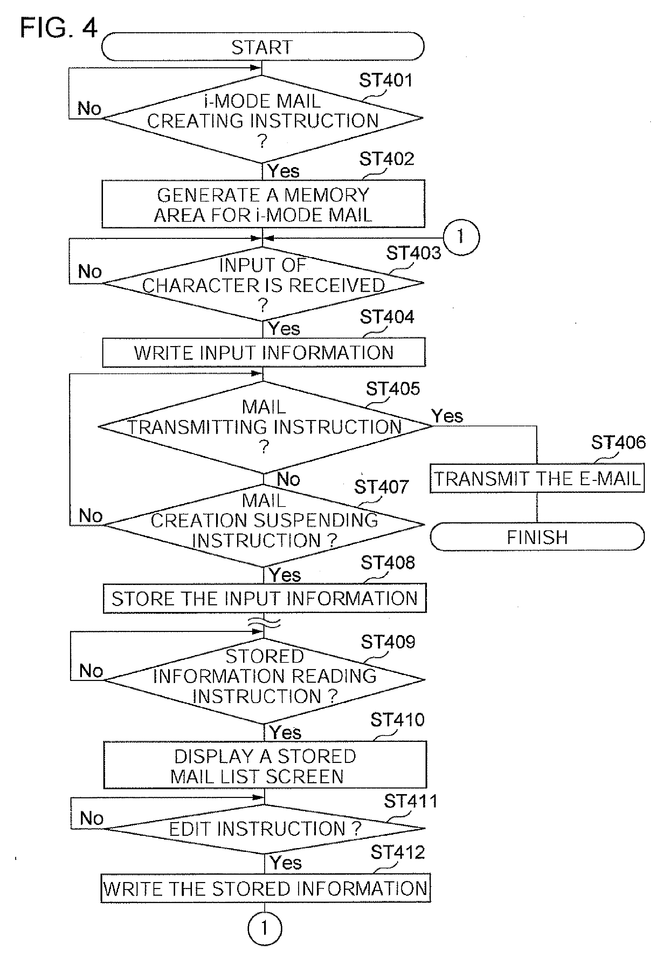

FIG.4 is a flow diagram to explain the operation when i-mode mail is transmitted in the cellular telephone 10 according to this embodiment. As shown in FIG.4, the cellular telephone 10 always monitors whether an instruction to create i-mode mail is received through the operation section 14 (ST401). The monitoring operation is continued until the instruction to create i-mode mail is received from the user.

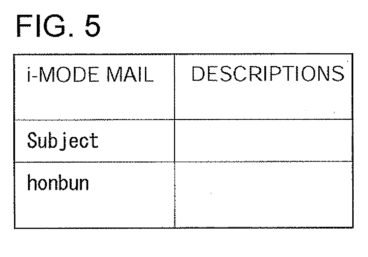

When the instruction to create i-mode mail is received from the user, a memory area for i-mode mail is generated in the sub-memory 17 (ST402) . At this time, the memory area for i-mode mail as shown in FIG.5 is generated in the sub-memory 17. As shown in FIG.5, the memory area for i-mode mail is configured to store descriptions of "Subject" and "honbun (message)".

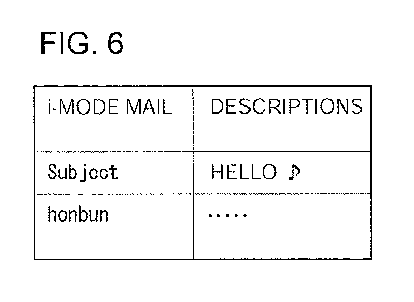

After generating the memory area for i-mode mail, it is determined whether input of character information is received through the operation section 14 (ST403). Herein, when input of character information is received, the input character information (hereinafter, referred to as "input information" as appropriate) is written in the memory area for i-mode mail (ST404). For example, the input information as shown in FIG.6 is written in the memory area for i-mode mail. In addition, FIG.6 shows the case where the input information is written only in "Subject".

When the input information is written in the memory area for i-mode mail, it is determined whether an instruction (mail transmitting instruction) to transmit the mail is received through the operation section 14 (ST405). Herein, when the mail transmitting instruction is received, the input information written in the memory area for i-mode mail is transmitted to the server 20 through the i-mode mail processing section 11 (ST406). Then, when the cellular telephone 10 completes the operation of transmitting the i-mode mail to the server 20, the cellular telephone 10 finishes the operation of transmitting the i-mode mail.

Meanwhile, when the instruction to transmit the mail is not received, it is determined whether an instruction (mail creation suspending instruction) to suspend creation of the mail is received through the operation section 14 (ST407). In addition, when the mail creation suspending instruction is not received, the processing returns to ST405, and it is determined again whether the mail transmitting instruction is received. In addition, when predetermined time has elapsed with neither the mail transmitting instruction nor the mail creation suspending instruction received, it is preferable to display a message to urge input of an instruction, or message indicative of error in the display section 15.

When the mail creation suspending instruction is received, the input information written in the memory area for i-mode mail is stored in an area (hereinafter, referred to as a "mail in process of creation storing area") to store mail in process of creation in the main memory 16 (ST408) . In this case, the input information is stored with the creation data and Web mail flag added thereto.

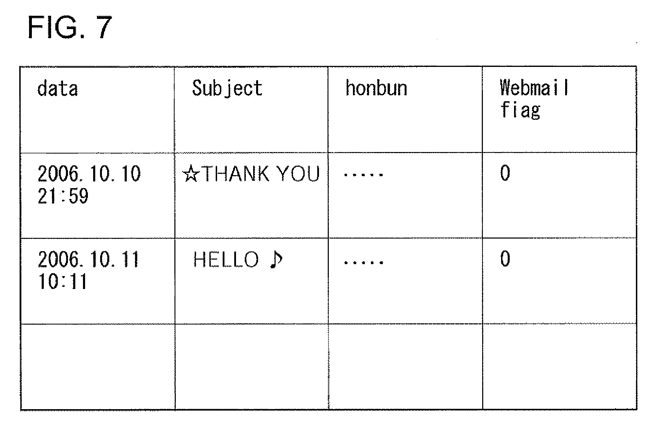

Herein, the Web mail flag is a flag to identify whether the mail is mail stored in the mail in process of creation storing area during the creation of Web mail. When the mail is stored in the mail in process of creation storing area during the creation of i-mode mail, "0" is set as the Web mail flag. Meanwhile, when the mail is stored in the mail in process of creation storing area during the creation of Web mail, "1" is set as the Web mail flag. For example, as shown in FIG.7, the input information is stored in the mail in process of creation storing area for each item. FIG.7 shows the case where the input information as shown in FIG.6 is added and stored in the mail in process of creation storing area.

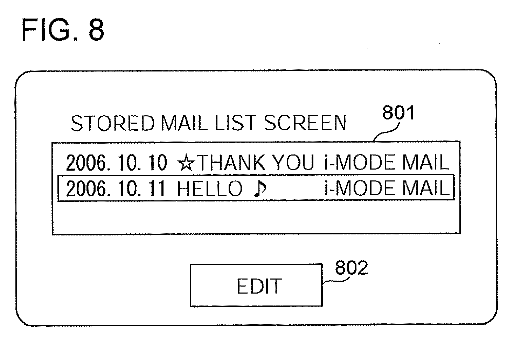

After storing the input information in the mail in process of creation storing area, it is determined whether an instruction (stored information reading instruction) to read the stored information is received through the operation section 14 (ST409) . Herein, when the stored information reading instruction is received, a stored mail list screen is displayed corresponding to the stored information stored in the mail in process of creation storing area (ST410). At this point, for example, the stored mail list screen as shown in FIG.8 is displayed in the display section 15.

As shown in F1G.8, in the stored mail list screen are formed a stored mail display field 801 where a list of stored mail is displayed, and an edit button 802 to instruct edits of the stored mail. In the stored mail display field 801 are displayed a creation date, subject, and mail type (for example, i-mode mail or Web mail) corresponding to the stored information stored in the mail in process of creation storing area. In addition, the stored mail list screen as shown in FIG.8 shows descriptions of the stored mail list screen corresponding to the stored information as shown in FIG.7.

After displaying the stored mail list screen, it is determined whether an edit instruction is received through the operation section 14 (ST411). More specifically, whether an edit instruction is received is determined by whether the edit button 802 is selected or not with one of the stored information in the stored mail list screen designated. Herein, when the edit instruction is received, the target stored information is written in the memory area for i-mode mail in the sub-memory 17 (ST412). At this point, the content of the Web mail flag is also written in the memory area for i-mode mail. Then, after writing the stored information in the memory area for i-mode mail, the processing returns to ST403, and the processing of ST403 and subsequent steps is repeated again. In addition, in this case, when the mail is transmitted in ST406, the Web mail flag is transmitted to the server 20 through the i-mode mail processing section 11 in the same way.

In addition, the flow diagram as shown in F1G.4 describes the case of repeating this determination processing when the edit instruction is not received, but the invention is not limited thereto, and is capable of being modified as appropriate. For example, it is possible to receive a transmitting instruction of the stored mail stored in the mail in process of creation storing area without receiving character information, and to transmit the stored information.

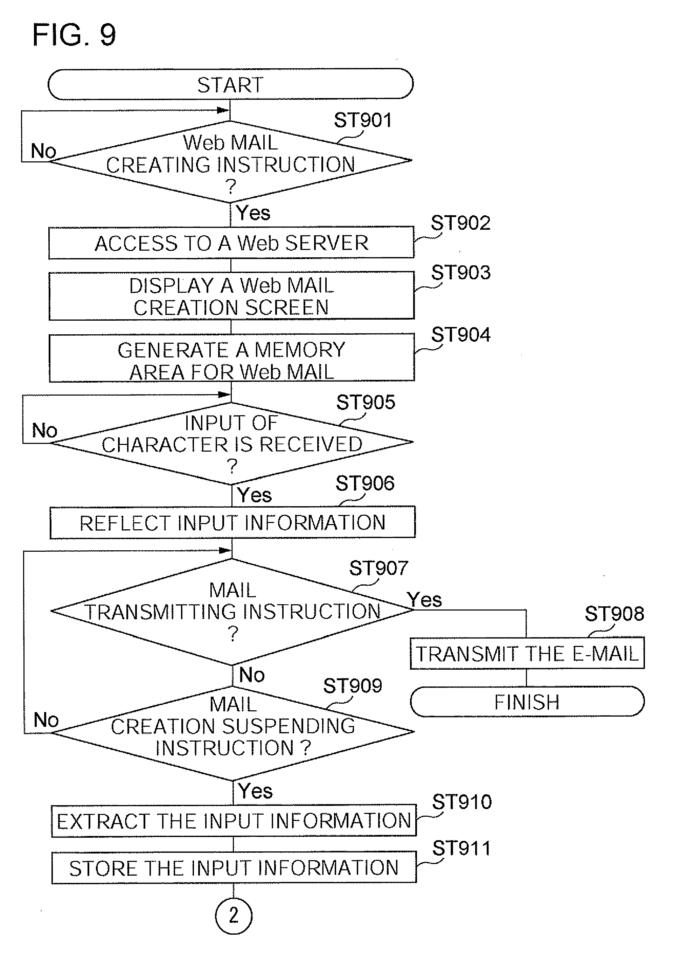

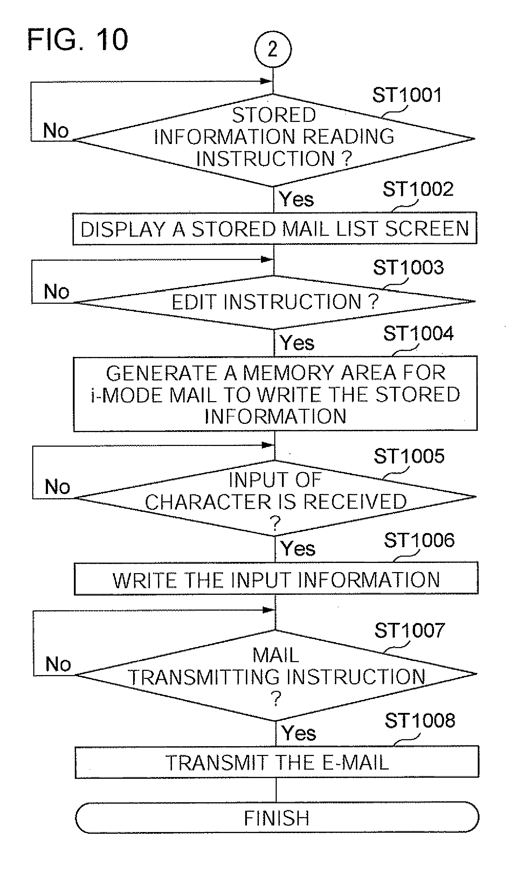

FIGs.9 and 10 are flow diagrams to explain the operation when Web mail is transmitted in the cellular telephone 10 according to this embodiment. As shown in FIG.9, the cellular telephone 10 always monitors whether an instruction to create Web mail is received through the operation section 14 (ST901). Herein, the instruction to create Web mail is assumed to include an instruction to gain access to the Web server 22 and an instruction to display a Web mail menu screen. The monitoring operation is continued until the instruction to create Web mail is received from the user.

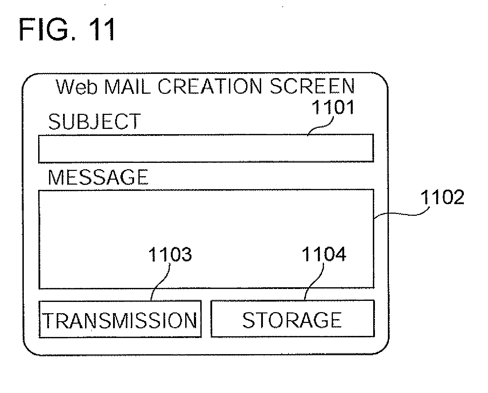

When the instruction to create Web mail is received from the user, the cellular telephone 10 gains access to the Web server 22 through the Web mail processing section 12 (ST902). Then, the cellular telephone 10 receives resource data to display a Web mail menu screen from the Web server 22, and displays the Web mail menu screen (not shown) in the display section 15. In the Web mail menu screen are displayed a button to shift to a reception list to check previously received e-mails, another button to shift to a transmission destination designation field to designate a transmission destination, still another button to shift to a Web mail creation screen to create Web mail, and the like. When the button to shift to the Web mail creation screen is selected from the Web mail menu screen, the display section 15 displays the Web mail creation screen (ST903). At this point, the display section 15 displays the Web mail creation screen as shown in FIG.11.

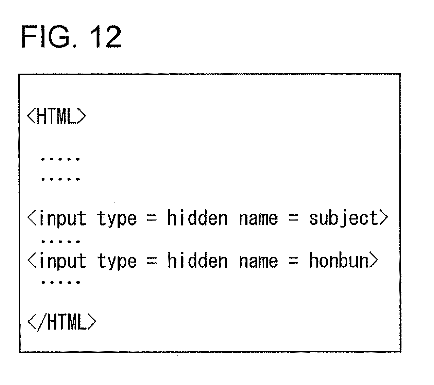

As shown in FIG. 11, in the Web mail creation screen are formed a subject field 1101 to which a subject of Web mail is input, a message field 1102 to which data of a message of mail is input, a transmission button 1103 to instruct to transmit Web mail, and a storage button 1104 to instruct to store Web mail in process of creation. In addition, when the Web mail creation screen is displayed as shown in FIG.11, for example, the cellular telephone 10 receives the resource data including descriptions as shown in FIG.12 from the Web server 22 through the Web mail processing section 12.

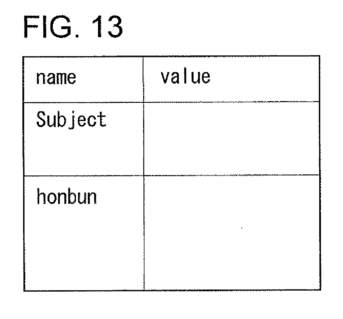

After displaying the Web mail creation screen, a memory area for Web mail is generated in the sub-memory 17 (ST904). At this time, the memory area for Web mail as shown in FIG.13 is generated in the sub-memory 17. As shown in FIG. 13, the memory area for Web mail is configured to store descriptions of "Subject" and "honbun (message)".

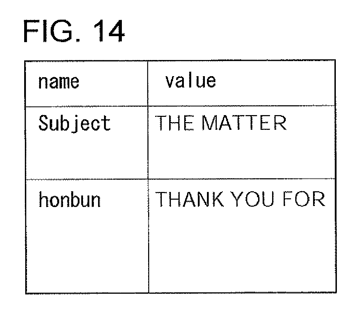

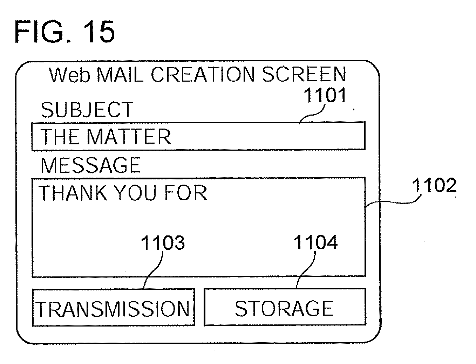

After generating the memory area for Web mail, it is determined whether input of character information is received through the operation section 14 (ST905). Herein, when input of character information is received, the input information is reflected in the memory area for Web mail (ST906). For example, the input information is reflected in the memory area for Web mail as shown in FIG.14. When the input information as shown in FIG.14 is reflected in the memory area for Web mail, the Web mail creation screen displays the input information as shown in FIG.15.

When the input information is reflected in the memory area for Web mail, it is determined whether an instruction (mail transmitting instruction) to transmit the mail is received through the operation section 14 (ST907). Herein, when the mail transmitting instruction is received, the input information reflected in the memory area for Web mail is transmitted to the server 20 through the Web mail processing section 12 (ST908). Then, when the cellular telephone 10 completes the operation of transmitting the Web mail to the server 20, the cellular telephone finishes the operation of transmitting the Web mail.

Meanwhile, when the instruction to transmit the mail is not received, it is determined whether an instruction (mail creation suspending instruction) to suspend creation of the mail is received through the operation section 14 (ST909). More specifically, whether the mail creation suspending instruction is received is determined by whether or not the storage button 1104 is selected in the Web mail creation screen. When the mail creation suspending instruction is not received, the processing returns to ST907, and it is determined again whether the mail transmitting instruction is received. In addition, when predetermined time has elapsed with neither the mail transmitting instruction nor the mail creation suspending instruction received, it is preferable to display a message to urge input of an instruction, or message indicative of error in the display section 15.

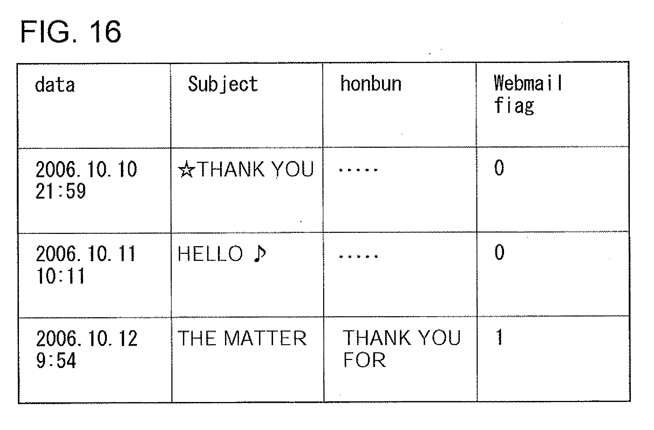

When the mail creation suspending instruction is received, the input information is extracted from the memory area for Web mail (ST910). Then, the extracted input information is stored in the mail in process of creation storing area in the main memory 16 (ST911). For example, in the mail in process of creation storing area, the extracted input information is stored as shown in FIG.16. In this case, in the same way as in the storing operation in i-mode mail, the input information is stored with the creation data and Web mail flag added thereto. FIG.16 shows the case where the input information as shown in FIG.14 is added and stored in the mail in process of creation storing area.

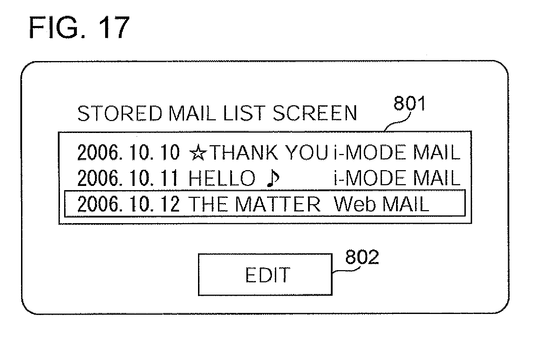

After storing the input information in the mail in process of creation storing area, as shown in FIG.10, it is determined whether an instruction (stored information reading instruction) to read the stored information is received through the operation section 14 (ST1001). Herein, when the stored information reading instruction is received, a stored mail list screen is displayed corresponding to the stored information stored in the mail in process of creation storing area (ST1002). At this point, for example, the stored mail list screen as shown in FIG.17 is displayed in the display section 15. In addition, the stored mail list screen as shown in FIG.17 shows descriptions of the stored mail list screen corresponding to the stored information as shown in FIG.16.

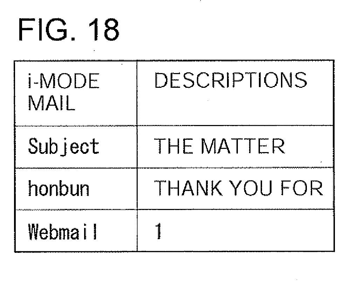

After displaying the stored mail list screen, it is determined whether an edit instruction is received through the operation section 14 (ST1003). More specifically, whether an edit instruction is received is determined by whether the edit button 802 is selected or not with one of the stored information in the stored mail list screen designated. Herein, when the edit instruction is received, the memory area for i-mode mail is generated in the sub-memory 17 to write the target stored information (ST1004). At this point, the input information as shown in FIG.18 is written in the memory area for i-mode mail. FIG.18 shows the case of designating the stored information in response to "2006.10.12" as shown in FIG.17. As shown in FIG.18, when the stored information is designated that is stored during the creation of Web mail, the content of the Web mail flag is written in the memory area for i-mode mail.

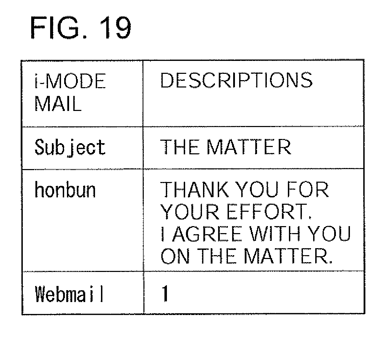

After writing the designated stored information in the memory area for i-mode mail, it is determined whether input of character information is received through the operation section 14 (ST1005). Herein, when input of character information is received, the input information is written in the memory area for i-mode mail (ST1006). For example, when the stored information as shown in FIG.18 is written, the input information is added and written in the memory area for i-mode mail as shown in FIG.19.

When the input information is written in the memory area for i-mode mail, it is determined whether an instruction (mail transmitting instruction) to transmit the mail is received through the operation section 14 (ST1007). Herein, when the mail transmitting instruction is received, the input information (including the stored information) written in the memory area for i-mode mail is transmitted to the server 20 through the i-mode mail processing section 11 (ST1008). At this point, the Web mail flag is also transmitted to the server 20 through the i-mode mail processing section 11 in the same way. Then, when the cellular telephone 10 completes the operation of transmitting the mail to the server 20, the cellular telephone 10 finishes this transmission operation.

Meanwhile, when the instruction to transmit the mail is not received, this determination processing is repeated until the mail transmitting instruction is received. In addition, when predetermined time has elapsed without receiving the mail transmitting instruction, it is preferable to display a message to urge input of an instruction, or message indicative of error in the display section 15.

In addition, the flow diagram as shown in FIG.10 describes the case of repeating this determination processing when an edit instruction is not received, but the invention is not limited thereto, and is capable of being modified as appropriate. For example, it is possible to receive a transmitting instruction of the stored mail stored in the mail in process of creation storing area without receiving character information, and to transmit the stored information.

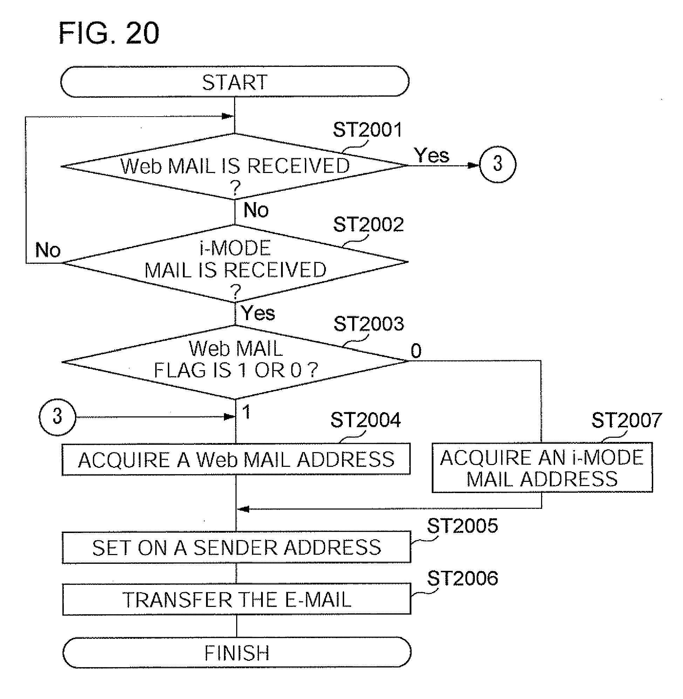

Described next is the operation when i-mode mail or Web mail is transferred in the server 20. FIG.20 is a flow diagram to explain the operation when i-mode mail or Web mail is transferred in the server 20 according to this embodiment.

As shown in FIG.20, in the server 20, the web server 22 always monitors whether Web mail is received from the cellular telephone 10 (ST2001). Then, while monitoring the Web mail, in server 20, the mail server 21 always monitors whether i-mode mail is received from the cellular telephone 10 (ST2002). When detecting either the Web mail or i-mode mail, the server 20 shifts to different processing. Hereinafter, descriptions are made in the case of detecting i-mode mail and in the case of detecting Web mail.

When receiving i-mode mail from the cellular telephone 10, the server 20 judges the content of the Web mail flag added to the i-mode mail (ST2003). Herein, the reason why the content of the Web mail flag is judged is because of determining whether the received i-mode mail is Web mail whose processing was suspended during the creation of mail. In other words, Web mail whose processing was suspended during the creation of mail is stored as i-mode mail in the cellular telephone 10. The content of the Web mail flag is judged to determine the Web mail which is thus converted in the form and stored.

When the Web mail flag is "1", the received i-mode mail is Web mail whose processing was suspended during the creation of mail. Therefore, the server 20 acquires a Web mail address of the cellular telephone 10 managed in the user data managing section 23 (ST2004), and sets this Web mail address on the sender address (ST2005). Subsequently, the server 20 transfers the mail to an e-mail address set on the transmission destination (ST2006) . Then, when the server 20 completes the operation of transferring the mail to the transmission destination, the server 20 finishes the operation of transferring the mail.

Meanwhile, when the Web mail flag is "0", or the Web mail flag is not added, the received i-mode mail is i-mode mail whose processing was suspended during the creation of mail, or i-mode mail created by normal processing. Therefore, the server 20 acquires an i-mode mail address of the cellular telephone 10 managed in the user data managing section 23 (ST2007), and sets this i-mode mail address on the sender address (ST2005). Subsequently, the server 20 transfers the mail to an e-mail address set on the transmission destination (ST2006). Then, when the server 20 completes the operation of transferring the mail to the transmission destination, the server 20 finishes the operation of transferring the mail.

Meanwhile, when Web mail is received from the cellular telephone 10 in ST2001, the server 20 acquires a Web mail address of the cellular telephone 10 managed in the user data managing section 23 (ST2004), and sets this Web mail address on the sender address (ST2005). In the case where Web mail is received from the cellular telephone 10, since such a case is limited to the case where the Web mail is generated by normal processing, the server 20 directly shifts to processing of ST2004 and subsequent steps. Then, the server 20 transfers the mail to an e-mail address set on the transmission destination (ST2006). Then, when the server 20 completes the operation of transferring the mail to the transmission destination, the server 20 finishes the operation of transferring the mail.

Thus, according to the mobile communication network system according to this embodiment, when the processing is suspended during the creation of Web mail in the cellular telephone 10, the already input information is stored in the cellular telephone 10, and the stored information is transmitted as an i-mode mail. Meanwhile, when the server 20 receives such i-mode mail from the cellular telephone 10, the server 20 replaces a mail address of the sender with a Web mail address to transfer. Therefore, even when the processing is suspended during the creation of Web mail, it is not necessary to perform the processing again from the beginning, and since the mail is transferred from the Web mail address through the server 20, it is possible to shorten the time required to create the mail, while reducing the cost required to create the mail.

In addition, the present invention is not limited to the above-mentioned embodiment, and is capable of being carried into practice in various manners within the scope of exhibiting the effect of the invention. Further, the present invention is capable of being carried into practice in various manners without departing from the scope of the object of the invention.

## Claims

1. A mobile terminal apparatus comprising:
a mail processing section for mobile terminals that performs communications with a mail server that provides mail service for mobile terminals using a mobile communication network;
a Web mail processing section that performs communications with a Web server that provides Web mail service; and
a storing section that stores already input information when creation of an e-mail is suspended in the mail service for mobile terminals,
wherein the already input information is stored in the storing section when creation of an e-mail is suspended in the Web mail service, while when receiving an instruction to transmit the information stored in the storing section, the mail processing section for mobile terminals transmits the information as an e-mail in the mail service for mobile terminals.

2. The mobile terminal apparatus according to claim 1, wherein in storing the already input information in the storing section when the creation of the e-mail is suspended in the Web mail service, the mobile terminal apparatus adds identification information indicating that the information is information stored during the creation of the e-mail in the Web mail service.

3. A server apparatus comprising:
a mail server section that provides mail service for mobile terminals using a mobile communication network;
a Web mail server section that provides Web mail service; and
a user data managing section that manages e-mail addresses assigned to a mobile terminal apparatus for the mail service for mobile terminals and for the Web mail service,
wherein when receiving an e-mail in the mail service for mobile terminals from the mobile terminal apparatus, the server apparatus sets an e-mail address of a sender corresponding to whether the e-mail is an e-mail stored during creation of the e-mail in the Web mail service to transfer.

4. The server apparatus according to claim 3, wherein when an e-mail in the mail service for mobile terminals received from the mobile terminal apparatus is the e-mail stored during creation of the e-mail in the Web mail service, the server apparatus replaces an e-mail address of a sender with an e-mail address for the Web mail service.

5. The server apparatus according to claim 3, wherein the server apparatus determines whether the e-mail is the e-mail stored during creation of the e-mail in the Web mail service, corresponding to identification information added to the e-mail in the mail service for mobile terminals received from the mobile terminal apparatus.

6. A mobile communication network system comprising:
a mobile terminal apparatus enabling use of mail service for mobile terminals using a mobile communication network and Web mail service; and
a server apparatus that manages e-mail addresses assigned to the mobile terminal apparatus for the mail service for mobile terminals and for the Web mail service,
wherein already input information is stored in the mobile terminal apparatus when creation of an e-mail in the Web mail service is suspended in the mobile terminal apparatus, while the stored information is transmitted as an e-mail in the mail service for mobile terminals, and when the server apparatus receives the e-mail, the server apparatus replaces an e-mail address of a sender with an e-mail address for the Web mail service to transfer.

7. The mobile communication network system according to claim 6, wherein the mobile terminal apparatus adds identification information indicating that the information is information stored during creation of the e-mail in the Web mail service in storing the already input information when the creation of the e-mail is suspended in the Web mail service, and the server apparatus determines whether the e-mail in the mail service for mobile terminals received from the mobile terminal apparatus is an e-mail stored during the creation of the e-mail in the Web mail service corresponding to the identification information.
